(19)

Europäisches Patentamt

European Patent Office

Office européen des brevets

(11) **EP 2 745 931 A1**

(12) **DEMANDE DE BREVET EUROPEEN**

(43) Date de publication:
**25.06.2014 Bulletin 2014/26**

(21) Numéro de dépôt: **13306574.8**

(22) Date de dépôt: **18.11.2013**

(51) Int Cl.:
*B01J 21/04* [(2006.01)]    *B01J 23/22* [(2006.01)]
*B01J 23/88* [(2006.01)]    *B01J 23/882* [(2006.01)]
*B01J 23/883* [(2006.01)]    *B01J 23/887* [(2006.01)]
*B01J 27/185* [(2006.01)]    *B01J 27/188* [(2006.01)]
*B01J 27/19* [(2006.01)]    *B01J 35/10* [(2006.01)]
*C10G 45/08* [(2006.01)]

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.12.2012 FR 1203467**

(71) Demandeur: **IFP Energies nouvelles**
**92852 Rueil Malmaison Cedex (FR)**

(72) Inventeurs:
- **GUICHARD, Bertrand**
  **38140 IZEAUX (FR)**
- **DIGNE, Mathieu**
  **69007 LYON (FR)**

(54) **Catalyseur d'hydrotraitement dé résidus d'hydrocarbures comprenant dû vanadium et son utilisation dans un procédé d'hydroconversion dé residus**

(57) L'invention concerne un catalyseur pour l'hydrotraitement de charges hydrocarbonées lourdes comprenant au moins un élément du groupe VIB ; au moins un élément du groupe VIII ; du phosphore, à une teneur comprise entre 0,1 et 9% poids de pentoxyde de phosphore par rapport à la masse totale de catalyseur ; du vanadium, à une teneur comprise entre 0,25 à 7 % poids de pentoxyde de vanadium par rapport à la masse totale de catalyseur ; au moins un support oxyde réfractaire poreux ; ledit catalyseur ayant les caractéristiques suivantes :

○ un volume poreux total supérieur ou égal à 0,3 ml/g ;
○ un volume macroporeux, défini comme le volume des pores de diamètre supérieur à 50 nm, inférieur ou égal à 40% du volume poreux total ;
○ un diamètre médian des mésopores, définis comme les pores de diamètre compris entre 3,6 et 50 nm, compris entre 5 nm et 36 nm ;
○ une surface BET au moins égale à 120 m$^2$/g.

L'invention concerne également un procédé d'hydrotraitement de charges hydrocarbonées lourdes de type résidus, en lit fixe et/ou en lit bouillonnant, utilisant ledit catalyseur.

EP 2 745 931 A1

**Description**

Domaine technique de l'invention

L'invention concerne l'hydrotraitement de charges lourdes, notamment de type résidus et des catalyseurs d'hydrotraitement contenant du vanadium. L'invention consiste en l'utilisation de catalyseurs supportés sur un support de type alumine, comprenant un élément du groupe VI B et un élément du groupe VIII, ainsi que du phosphore et du vanadium. On a découvert que ce type de catalyseur permet, dans différentes configurations de procédés d'hydrotraitement de résidus, d'améliorer le taux de conversion de fractions lourdes, notamment de type résidu sous vide en une fraction plus légère, tout en maintenant les autres fonctions du catalyseur (hydrodésulfuration HDS, hydrodémétallation HDM, réduction du Carbon Conradson Residue HDCCR, ...) à des performances élevées.

**Art antérieur**

La purification et la conversion des charges hydrocarbonées, telles que les coupes pétrolières soufrées, prend une importance de plus en plus grande dans la pratique du raffinage avec la nécessité croissante de réduire la quantité de soufre dans les coupes pétrolières et de convertir des fractions lourdes (dont le point d'ébullition est supérieur à 370°C) en fractions plus légères valorisables en tant que carburant. Il est en effet nécessaire, au vu des spécifications imposées par chaque pays pour les carburants commerciaux, de valoriser au mieux les bruts importés, de plus en plus riches en fractions lourdes et en hétéroatomes et de plus en plus pauvres en hydrogène.
Plusieurs schémas de raffinage impliquant différentes types de procédés existent pour le traitement de charges pétrolières lourdes. Zong et al. (Recent Patents on Chemical Engineering, 2009, 2, 22-36) résument les différents procédés connus dans ce domaine. Parmi ceux-ci, deux procédés principaux d'hydrotraitement catalytique de résidus atmosphériques (RA) ou sous vide (RSV) existent commercialement :

- les procédés en lit fixe,
- les procédés en lit bouillonnant.

Il est connu de l'Homme du métier que l'hydrotraitement catalytique permet, par la mise en contact d'une charge hydrocarbonée avec un catalyseur dont les propriétés, en termes de métaux de la phase active et de porosité, sont préalablement bien ajustées, de réduire sensiblement sa teneur en asphaltènes, métaux, soufre et autres impuretés tout en améliorant le rapport hydrogène sur carbone (H/C) et tout en la transformant plus ou moins partiellement en coupes plus légères.
Les procédés d'hydrotraitement des résidus en lit fixe (couramment appelés "Resid Desulfurization" unit ou RDS) conduisent à des performances en raffinage élevées : typiquement ils permettent de produire une coupe de température d'ébullition supérieure à 370 °C contenant moins de 0,5% poids de soufre et moins de 20 ppm de métaux à partir de charges contenant jusqu'à 5% poids de soufre et jusqu'à 250 ppm de métaux (notamment Nickel et Vanadium : Ni+V). Les différents effluents ainsi obtenus peuvent servir de base pour la production de fiouls lourds de bonne qualité et/ou de charges prétraitées pour d'autres unités telles que le craquage catalytique ("Fluid Catalytic Cracking"). En revanche, l'hydroconversion du résidu en coupes plus légères que le résidu atmosphérique (gazole et essence notamment) est en général faible, typiquement de l'ordre de 10-20 %pds. Dans un tel procédé, la charge, préalablement mélangée à de l'hydrogène, circule à travers plusieurs réacteurs en lit fixe disposés en série et remplis par des catalyseurs. La pression totale est typiquement comprise entre 100 et 200 bars et les températures entre 340 et 420 °C. Les effluents soutirés du dernier réacteur sont envoyés vers une section de fractionnement.
Les unités RDS présentent au moins un inconvénient majeur : les durées de cycle (temps au bout duquel les performances de l'unité ne peuvent plus être maintenues en raison du colmatage et/ ou de la désactivation des catalyseurs) sont relativement courtes comparées aux procédés d'hydrotraitement de coupes plus légères : cela induit des arrêts de l'unité et le remplacement de tout ou partie des catalyseurs usés par des catalyseurs neufs. Plusieurs raisons en sont la cause. D'abord, les métaux naturellement présents dans la charge, notamment dans les pétroles bruts en plus ou moins grande quantité selon l'origine du pétrole, ont tendance à se concentrer dans les fractions à point d'ébullition élevé lors des opérations de distillation (et en particulier dans les résidus). C'est en particulier le cas du vanadium, du nickel, du fer, du sodium, du titane, du silicium et du cuivre. Ces métaux, présents en général sous forme de complexes organométalliques, se déposent sous la forme d'un sulfure solide qui vient se fixer sur la surface interne des pores du catalyseur. Au dépôt de ces impuretés métalliques s'ajoute celui du coke : l'ensemble tend alors à désactiver et colmater rapidement le système catalytique. Les bouches des pores s'obstruent plus vite que leurs autres parties, ce qui va de pair avec une diminution de leur diamètre. Ceci entraîne une limitation accrue de la diffusion des molécules et une accentuation du gradient de concentration depuis la périphérie vers l'intérieur des pores, au point que le dépôt de coke conduit assez rapidement à l'obstruction complète des pores. Il est connu que les premiers lits catalytiques peuvent se désactiver rapidement en raison de l'important dépôt de métaux qui se produit. Pour compenser cette désactivation, la température doit alors être augmentée. Néanmoins, cette augmentation de la température favorise le dépôt de coke accélérant les processus de colmatage intra granulaire (bouchage de la porosité du catalyseur) et extra granulaire (bouchage du lit catalytique). Ces phénomènes de désactivation sont bien documentés dans la littérature (A. Marafi et al. dans Energy & Fuels 2008, 22, page 2925, M. Absi-Halabi et al. Applied Catalysis, 1991, 72, page 193, et B.M. Vogelaar dans Chemical Engineering Science, 2006, 61, page 7463). Ces phénomènes conduisent à des arrêts pour le remplacement des solides et à une surconsommation de catalyseur, qui sont préjudiciables au procédé.

Une voie pour améliorer la durée de cycle et diminuer la consommation en catalyseur est d'utiliser un prétraitement ou un dispositif spécifique en amont de l'unité RDS pour améliorer la performance globale de l'unité. Dans cette optique, on peut citer le brevet US 5 472 928 qui propose un réacteur avec un lit mobile en tête de l'unité, permettant des ajouts et de retraits en continu de catalyseurs dans le réacteur. De même, le brevet US 6 554 994 propose d'utiliser un réacteur avec un sens d'écoulement ascendant (par opposition à un sens descendant dans les unités RDS conventionnelle) en tête de l'unité avec deux couches de catalyseurs avec des activités différentes. Enfin, le brevet FR2 681 891 propose un système de réacteurs permutables en entrée de l'unité RDS qui de manière cyclique et chacun à leur tour peuvent être court-circuités et rechargés avec du catalyseurs frais.

Au delà de ces améliorations du procédé, le développement de catalyseurs performants est indispensable. Classiquement, le procédé d'hydrotraitement en lit fixe est constitué d'au moins deux étapes (ou sections). La première étape dite d'hydrodémétallation (HDM) vise principalement à éliminer la majorité des métaux de la charge en utilisant un ou plusieurs catalyseurs d'hydrodémétallation. La dénomination HDM regroupe principalement les opérations d'élimination du vanadium et du nickel et dans une moindre mesure du fer. La seconde étape ou section, dite d'hydrodésulfuration (HDS), consiste à faire passer le produit de la première étape sur un ou plusieurs catalyseurs d'hydrodésulfuration, plus actifs en terme d'hydrodésulfuration et d'hydrogénation de la charge, mais moins tolérants aux métaux.

Pour l'étape d'hydrodémétallation (HDM), le catalyseur doit être apte à traiter des charges riches en métaux et en asphaltènes, tout en ayant un haut pouvoir démétallisant associé à une haute capacité de rétention en métaux et une grande résistance au cokage. Des catalyseurs présentant une distribution poreuse bimodale permettant d'atteindre de forts rendements en HDM ont été décrits dans le brevet US 5 221 656. L'avantage d'une telle distribution poreuse est aussi mise en avant dans les brevets US 5 089 463 et US 7 119 045. La phase active initiale du catalyseur placé dans l'étape d'hydrodémétallation est généralement constituée de nickel et de molybdène, et éventuellement de dopants tels que le phosphore. Cette phase active est connue pour être plus hydrogénante qu'une phase constituée de cobalt et de molybdène, aussi utilisée parfois, et permet donc de limiter la formation de coke dans la porosité et ainsi la désactivation.

Pour l'étape d'hydrodésulfuration (HDS), le catalyseur doit présenter un fort potentiel hydrogénolysant de manière à réaliser un raffinage profond des produits : désulfuration, poursuite de la démétallation, abaissement du Carbon Conradson (CCR Carbon Conradson Residue, norme ASTM D 482, qui permet une évaluation de la quantité de résidus de carbone produit après une combustion sous des conditions standards de température et de pression) et de la teneur en asphaltènes. Un tel catalyseur se caractérise par un faible volume macroporeux (US 6 589 908). De plus, le brevet US 4 818 743 enseigne que la distribution poreuse peut être monopopulée entre 1 et 13 nm ou bipopulée avec une différence relative entre les deux populations qui peut varier de 1 à 20 nm comme dans le brevet US 6 589 908. La phase active initiale du catalyseur placé dans l'étape d'hydrodésulfuration est généralement constituée de cobalt et de molybdène, comme cela est décrit dans le brevet US 6 332 976.

L'art antérieur montre qu'il est de première importance de mettre en oeuvre une succession de catalyseur présentant une porosité différente entre la section HDM et la section HDS. En effet, la dispersion de la phase active nécessite de disposer de supports de fortes surfaces spécifiques, mais la porosité du support doit aussi permettre aux réactifs de diffuser facilement au sein de celle-ci. Il existe donc un compromis à réaliser entre accessibilité de la phase active et taille de la porosité comme nous l'enseigne par exemple le brevet US2006/0060509. Des catalyseurs à base de cobalt, de molybdène et éventuellement de phosphore sur des supports monomodaux mésoporeux sont privilégiés pour l'étape d'HDS, car ils permettent d'atteindre de meilleurs taux de conversion HDS. L'enchaînement de ces formulations sur les supports définis ci-dessus nécessite des teneurs en phase active relativement importantes (de 2 à 8% en poids de $MoO_3$ pour la section HDM et de 10 et 17% en poids de $MoO_3$ pour la section HDS), pénalisant ainsi le coût des catalyseurs.

Lorsque la teneur en métaux dans la charge est trop importante (supérieure à 250 ppm) et/ou lorsque une conversion importante (transformation de la fraction lourde 540 °C+ (ou 370 °C+) en une fraction plus légère 540 °C- (ou 370 °C-) est recherchée, des procédés d'hydrotraitement en lit bouillonnant sont préférés. Dans ce type de procédé (M.S. Rana et al., Fuel 86 (2007), p.1216), les performances en purification sont moindres que celles des procédés RDS (typiquement le rendement en hydrodésulfuration totale est compris entre 55 et 92 % et le rendement en hydrodémétallation totale est compris entre 65 et 95%). En revanche, l'hydroconversion de la fraction résidu est élevée (de l'ordre de 45 à 85 %vol). Les températures importantes mises en jeu, comprises entre 415 et 440 °C, contribuent à cette hydroconversion élevée. Les réactions de craquage thermique sont en effet favorisées, le catalyseur n'ayant pas en général une fonction d'hydroconversion spécifique. De plus, les effluents formés par ce type conversion peuvent présenter des problèmes de stabilité (formation de sédiments).

Il y a donc un besoin de développer des catalyseurs présentant une fonction d'hydroconversion élevée tout en maintenant des fonctions de purification (hydrodémétallation et hydrodésulfuration notamment) élevées, de tels catalyseurs pouvant être utilisés en lit fixe ou en lit bouillonnant. Un des objectifs recherchés est de contribuer, notamment, de manière plus spécifique, à améliorer les performances des procédés RDS.

L'ajout de dopant pouvant apporter de l'acidité pour améliorer l'hydroconversion de résidus a plusieurs fois été envisagée dans la littérature, mais révèle souvent un grand nombre de verrous techniques qui n'ont pas pu être levés. Ainsi, pour l'utilisation de supports oxydes de type aluminosilicates, les propriétés texturales sont souvent limitantes pour la conversion de produits pétroliers lourds tels que les résidus (Maity et al., Appl. Catal., A, 250 (2003), p. 231). Les brevets JP7196308 et JP9255321 qui décrivent des silice-alumines avec leurs propriétés texturales confirment bien que les supports silice-alumine conventionnels sont plus adéquats pour l'hydroconversion des charges plus légères, comparativement aux résidus pétroliers. Les performances sont donc au final décevantes (Rana et al., Pet. Sci. Technol., 25 (2007) p187). L'acidité entraîne par ailleurs souvent la formation d'un excédent de coke (Maity et al., Energy & Fuels, 19 (2005), p343).

Généralement l'ajout de silicium en hydrotraitement de résidus, n'est donc pas envisagé pour améliorer la conversion, mais comme un agent dopant modifiant la phase active (CN1020109138) ou permettant d'ajuster la texture poreuse (EP1305112B1).

Les autres dopants envisagés pour modifier l'acidité des catalyseurs d'hydrotraitement de résidus, ne modifient pas les performances en hydroconversion dans les conditions du lit fixe. Ainsi, l'avantage du fer n'a pu être mis en évidence que dans les conditions du lit bouillonnant (450 °C, US4,729,980) ou n'a pas été regardé du point de vue de la conversion générée (US 2817626). Le fluor n'a pas non plus démontré d'effet sur la conversion (CN 1887420).

Enfin, le vanadium, naturellement présent dans les produits pétroliers, a souvent été vu comme un poison conduisant à la désactivation du catalyseur. On en retrouve ainsi sur des catalyseurs préparés à partir d'un support comalaxé avec du catalyseur usé, régénéré, comme dans le brevet JP2006-061845. Le principal avantage de ce mode de préparation est le recyclage de catalyseur usé et donc un gain économique. Le comalaxage de vanadium avec le support a également été envisagé afin de prévenir la formation d'aluminate de nickel (US 3824180 ou US 3884798), mais aucun avantage en hydroconversion n'est obtenu.

Des méthodes de préparation de solutions aqueuses contenant du vanadium et du molybdène, et éventuellement du phosphore existent (US 5 792 721). L'utilisation de mélanges molybdène-vanadium pour préparer des catalyseurs a été décrite sous forme d'hétéropolyanions pour l'hydrotraitement par (Soogund et al., Appl. Catal. B, 98 (2010), p39), ou pour l'oxydodésulfuration (EP0482841).

Cependant aucun gain en hydroconversion associé à l'utilisation conjointe de molybdène et de vanadium n'est décrit. Par ailleurs, aucun des brevets proposant l'incorporation de vanadium dans des catalyseurs (par exemple les brevets FR2 780 302, US3 269 958, US2 817 626, US4 499 203, ou US3 849 292) n'a permis de mettre en évidence un quelconque avantage en hydroconversion. On a notamment montré l'avantage de formulation nickel-vanadium, uniquement pour l'hydrodémétallation (US 3 920 538). La formulation molybdène-vanadium (US 4 440 631) quand à elle n'est pas la plus avantageuse dans des conditions d'hydroconversion sévères (450 °C), avec notamment une forte quantité de sédiments qui se forment.

Le demandeur a découvert que l'utilisation, en hydrotraitement de résidus, d'un catalyseur associant un élément du groupe VI B, comme le molybdène, un élément du groupe VIII, comme le cobalt ou le nickel, ainsi que du phosphore et du vanadium, ces éléments étant supportés sur un oxyde réfractaire de type alumine, engendrait un gain en hydroconversion qui ne pouvait pas être attendu par l'homme du métier.

## Objet de l'invention

La présente invention concerne un catalyseur pour l'hydrotraitement de charges hydrocarbonées lourdes comprenant au moins un élément du groupe VI B et au moins un élément du groupe VIII supportés sur un support oxyde réfractaire, par exemple l'alumine. Le catalyseur utilisé dans le procédé selon l'invention contient du vanadium et du phosphore, le vanadium étant imprégné avec tout ou partie des autres éléments métalliques sur le support oxyde réfractaire.

L'invention concerne également un procédé d'hydrotraitement de charges hydrocarbonées lourdes utilisant ledit catalyseur. Le catalyseur peut être mis en oeuvre directement sur la charge hydrocarbonée lourde à traiter, ou en association avec un ou plusieurs autres catalyseurs connus de l'homme du métier. Son introduction permet un gain significatif d'hydroconversion, c'est à dire une augmentation de la transformation d'au moins une fraction de la charge lourde en hydrocarbures plus légers.

**Résumé de l'invention**

L'invention concerne un catalyseur pour l'hydrotraitement de charges hydrocarbonées lourdes comprenant :

- au moins un élément du groupe VIB ;
- au moins un élément du groupe VIII ;
- du phosphore, à une teneur comprise entre 0,1 et 9% poids de pentoxyde de phosphore par rapport à la masse totale de catalyseur ;
- du vanadium, à une teneur comprise entre 0,25 à 7 % poids de pentoxyde de vanadium par rapport à la masse totale de catalyseur ;
- au moins un support oxyde réfractaire poreux ;

ledit catalyseur ayant les caractéristiques suivantes :

o un volume poreux total supérieur ou égal à 0,3 ml/g ;
o un volume macroporeux, défini comme le volume des pores de diamètre supérieur à 50 nm, inférieur ou égal à 40% du volume poreux total ;
o un diamètre médian des mésopores, définis comme les pores de diamètre compris entre 3,6 et 50 nm, compris entre 5 nm et 36 nm ;
o une surface BET au moins égale à 120 m$^2$/g.

La teneur en vanadium est avantageusement comprise entre 0,5 et 5% poids de pentaoxyde de vanadium par rapport à la masse totale de catalyseur, de préférence entre 0,6 et 4 % poids de pentaoxyde de vanadium par rapport à la masse totale de catalyseur.
La teneur en métal du groupe VIB est avantageusement comprise entre 2 et 20 % poids et la teneur en métal du groupe VIII est avantageusement comprise entre 0,1 et 5 % poids, les teneurs étant exprimées en % d'oxyde métallique par rapport à la masse totale de catalyseur.
Le support oxyde comprend avantageusement une proportion majeure d'alumine.
De préférence, l'élément du groupe VIB est le molybdène.
De préférence, l'élément du groupe VIII est le nickel ou le cobalt.
Le rapport atomique vanadium sur métaux du groupe VIB est avantageusement compris entre 0,1:1 et 0,5:1.
Le catalyseur peut être sous forme partiellement ou totalement sulfurée.
Dans un mode de réalisation, le diamètre médian des mésopores est compris entre 5 et 20 nm, le volume poreux total est supérieur ou égal à 0,3 ml/g, et le volume macroporeux est inférieur à 10% du volume poreux total.
Dans un autre mode de réalisation, le diamètre médian des mésopores est compris entre 10 et 36 nm, le volume poreux total est supérieur ou égal à 0,5 ml/g, et le volume macroporeux est supérieur à 5% du volume poreux total.
L'invention concerne également un procédé d'hydrotraitement utilisant au moins un catalyseur tel que décrit ci-dessus pour l'hydrotraitement de charges hydrocarbonées lourdes choisies parmi les résidus atmosphériques, les résidus sous vide issus de la distillation directe, les huiles désasphaltées, les résidus issus des procédés de conversions tels que par exemple ceux provenant du coking, d'une hydroconversion en lit fixe, en lit bouillonnant ou encore en lit mobile, pris seuls ou en mélange.
Le procédé peut être réalisé en partie en lit bouillonnant à une température comprise entre 320 et 450 °C, sous une pression partielle d'hydrogène comprise entre 3 MPa et 30 MPa, à une vitesse spatiale avantageusement comprise entre 0,1 et 10 volumes de charge par volume de catalyseur et par heure, et avec un rapport hydrogène gazeux sur charge liquide d'hydrocarbures avantageusement compris entre 100 et 3000 normaux mètres cubes par mètres cubes.
Le procédé peut être réalisé au moins en partie en lit fixe à une température comprise entre 320 °C et 450 °C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.
Avantageusement, le procédé d'hydrotraitement de résidus en lit fixe comprend au moins :

a) une étape d'hydrodémétallation
b) une étape d'hydrodésulfuration

ledit catalyseur étant utilisé dans au moins une desdites étapes a) et b).

**Description détaillée de l'invention**

La demanderesse a découvert qu'en combinant le vanadium et le phosphore avec au moins un élément métallique du groupe VI B et au moins un élément métallique du groupe VIII, le tout supporté sur un oxyde réfractaire poreux ayant des caractéristiques texturales adéquates, on obtient un catalyseur amélioré pour l'hydrotraitement de charges hydrocarbonées lourdes. Ledit catalyseur, lorsqu'il est chargé dans au moins une partie du ou des réacteurs d'un procédé d'hydrotraitement de fractions lourdes d'hydrocarbures (fonctionnant au moins pour partie en lit fixe) permet d'améliorer les performances du système catalytique complet et en particulier le niveau d'hydroconversion. En mettant en oeuvre ledit catalyseur selon l'invention, aucun des inconvénients listés dans l'art antérieur n'a été mis en évidence et on dispose donc d'un procédé très intéressant pour le raffineur.

Le terme "hydroconversion" employé ci-dessus fait référence au taux de conversion mesuré entre la charge entrante et un effluent du procédé d'hydrotraitement, par rapport à une température de référence. Par exemple, on parlera d'hydroconversion de la coupe 540 °C+ pour définir le taux de conversion des fractions de la charge ayant un point d'ébullition supérieur à 540 °C en fractions plus légères ayant un point d'ébullition inférieur à 540 °C.

**Description du catalyseur**

Le catalyseur selon l'invention comprend au moins un métal du groupe VI B, au moins un métal du groupe VIII, du phosphore, du vanadium et un support constitué d'un oxyde réfractaire poreux, et est avantageusement utilisable dans un procédé d'hydrotraitement de charges lourdes tels que les résidus pétroliers.

Les métaux du groupe VI B sont avantageusement choisis parmi le molybdène et le tungstène, et de préférence ledit métal du groupe VI B est le molybdène.

Les métaux du groupe VIII sont avantageusement choisis parmi le fer, le nickel ou le cobalt et on préfèrera le nickel ou le cobalt.

La phase active du catalyseur comprend également du phosphore et du vanadium.

Le catalyseur utilisé selon la présente invention peut avantageusement être obtenu par toutes les méthodes bien connues de l'Homme du métier.

On utilise comme support de catalyseur des extrudés de diamètre généralement compris entre 0,5 et 10 mm, de préférence 0,8 et 3,2 mm.

Le support constitué d'un oxyde réfractaire poreux comprend généralement une proportion majeure d'alumine, c'est-à-dire au moins 50% d'alumine. Il est avantageusement choisi parmi les matrices à forte composante aluminique, telles que par exemple l'alumine ou la silice-alumine. Des dopants peuvent être introduits dans le support. Parmi ceux-ci, on retrouve la silice, le titane ou encore la zircone.

Lorsque la matrice contient de la silice, la quantité de silice est de préférence inférieure ou égale à 25 % en poids par rapport au poids total de la matrice aluminique. De manière préférée, le support est l'alumine et de préférence l'alumine gamma.

Le support est généralement préalablement mis en forme et calciné avant imprégnation. La mise en forme peut-être avantageusement réalisée par extrusion, par pastillage, par la méthode de la goutte d'huile, par granulation au plateau tournant ou par toute autre méthode bien connue de l'Homme du métier. La calcination peut-être avantageusement opérée entre 450 et 1000 °C sous air sec ou humide.

Le catalyseur selon l'invention présente avantageusement un volume poreux total (VPT) d'au moins 0,3 ml/g et de préférence d'au moins 0,4 ml/g.

Dans le cas où le catalyseur est utilisé dans une section d'hydrodémétallation HDM, le volume poreux total est avantageusement d'au moins 0,5 ml/g, de préférence d'au moins 0,6 ml/g, et de manière très préférée, d'au moins 0,65 ml/g.

Dans le cas où le catalyseur est utilisé dans une section d'hydrodésulfuration HDS, le volume poreux total est avantageusement d'au moins 0,3 ml/g, et de préférence d'au moins 0,4 ml/g.

Le volume poreux total est déterminé par la méthode de l'intrusion au mercure. Les volumes sont mesurés par la technique de la pénétration du mercure dans laquelle on applique l'équation Washburn qui donne la relation entre la pression, le diamètre du plus petit pore dans lequel le mercure pénètre à ladite pression, l'angle de mouillage et la tension superficielle selon la formule :

$$d = \frac{(4.t.\cos(\theta)).10}{P}$$

dans laquelle

"d" représente le diamètre du pore (nm)

t la tension superficielle (48,5 Pa),

θ l'angle de contact, (θ = 140 degrés) et

P la pression (MPa)

Le catalyseur utilisé selon l'invention présente avantageusement un volume macroporeux $V_{50nm}$, défini comme le volume des pores de diamètre supérieur à 50 nm, compris entre 0 et 40% du volume poreux total et de préférence entre 0 et 30% du volume poreux total.

Dans le cas où le catalyseur est utilisé dans une section HDM, le volume macroporeux est avantageusement supérieur à 5 %, de préférence supérieur à 10 % et de façon encore plus préférée supérieur à 20 % du volume poreux total (VPT). Une telle caractéristique peut avantageusement être obtenue par une distribution multimodale ou à partir d'un support de distribution bimodale, le premier mode étant mésoporeux et le second macroporeux.

Dans le cas où le catalyseur est utilisé dans une section HDS, le volume macroporeux est inférieur à 10 %, de façon préférée 5%, et de façon encore plus préférée 1% du volume poreux total (VPT).

Le diamètre à Vméso/2 (diamètre mésoporeux médian, noté $dp_{Vméso/2}$) le volume mésoporeux étant le volume correspondant aux pores de diamètre inférieur à 50 nm, est avantageusement compris entre 5 nm et 36 nm et de préférence entre 6 et 25 nm.

Dans le cas où le catalyseur est utilisé dans une section HDM, le diamètre mésoporeux médian est avantageusement compris entre 10 et 36 nm et de préférence entre 10 et 25 nm.

Dans le cas où le catalyseur est utilisé dans une section HDS, le diamètre mésoporeux médian est avantageusement compris entre 5 nm et 20 nm et de préférence entre 6 et 15 nm.

Le catalyseur utilisé selon la présente invention présente avantageusement une surface spécifique BET ($S_{BET}$) d'au moins 120 m$^2$/g, de préférence d'au moins 150 m$^2$/g. On entend par surface BET, la surface spécifique déterminée par adsorption d'azote conformément à la norme ASTM D 3663-78 établie à partir de la méthode BRUNAUER - EMMET - TELLER décrite dans le périodique "The journal of the American Chemical Society", 60, 309 (1938).

Avant mise en forme des extrudés du support, on peut éventuellement introduire par toute méthode connue, et à n'importe quelle étape de la préparation, de préférence par imprégnation ou comalaxage, tout ou partie des métaux catalytiques, ou d'un composé précurseurs des métaux catalytiques du catalyseur final. Si tout ou partie des éléments catalytiques n'a pas été introduit au cours de la synthèse du support, ce-dernier subit alors au moins une étape d'imprégnation. L'imprégnation classiquement réalisée est celle dite "à sec" bien connue de l'Homme du métier, mais tout autre mode d'imprégnation connu de l'Homme du métier peut être utilisé. Elle peut être réalisée en une seule étape par une solution contenant l'ensemble des éléments constitutifs du catalyseur final, c'est-à-dire une solution contenant au moins un composé du vanadium, au moins un composé du phosphore au moins un composé d'au moins un métal du groupe VI B et éventuellement au moins un composé d'au moins un métal du groupe VIII.

L'imprégnation peut aussi être réalisée en au moins deux fois. Les différents éléments peuvent ainsi être imprégnés successivement ou bien un des éléments peut aussi être imprégné en plusieurs séquences. Une des imprégnations qui est réalisée peut notamment servir à l'utilisation d'un composé organique que l'Homme du métier aurait souhaité introduire en plus des éléments constitutifs du catalyseur final

La solution des composés constitutifs des éléments du catalyseur final peut être avantageusement préparée dans un solvant aqueux, mais aussi dans un mélange eau-solvant organique ou encore dans un solvant organique pur. L'éthanol ou le toluène peuvent ainsi être cités comme exemple de solvant organique. Le pH de cette solution pourra être modifiée par l'ajout éventuel d'un acide. Enfin, on pourra avantageusement ajouter de l'eau oxygénée afin de modifier les espèces en solution et/ou faciliter la solubilité des précurseurs. Pour cela, l'Homme du métier utilisera les connaissances établies.

La présente invention s'applique aussi au cas où le catalyseur utilisé n'aurait pas été calciné. Dans ce cas, après imprégnation le catalyseur est seulement avantageusement séché, c'est à dire dont le traitement thermique final subis n'est pas supérieur à 300 °C.

Parmi les précurseurs qui peuvent être introduits dans la solution en tant que source d'éléments du groupe VIII, figurent avantageusement : les citrates, oxalates, carbonates, hydroxycarbonates, hydroxydes, phosphates, sulfates, aluminates, molybdates, tungstates, oxydes, nitrates, halogénures, par exemple, chlorures, fluorures, bromures, acétates, ou tout mélange des précurseurs énoncés ici. Concernant les sources de l'élément du groupe VI qui sont bien connues de l'Homme du métier, figurent avantageusement par exemple pour le molybdène et le tungstène : les oxydes, hydroxydes, acides molybdiques et tungstiques et leurs sels, en particulier les sels d'ammonium, heptamolybdate d'ammonium, tungstate d'ammonium, l'acide phosphomolybdique, l'acide phosphotungstique et leurs sels. On utilise de préférence les oxydes ou les sels d'ammonium tels que le molybdate d'ammonium, l'heptamolybdate d'ammonium ou le tungstate d'ammonium.

La source de phosphore préférée est l'acide orthophosphorique, mais ses sels et esters comme les phosphates alcalins, phosphate d'ammonium, phosphate de gallium ou phosphates d'alkyles conviennent également. Les acides phosphoreux, par exemple l'acide hypophosphoreux, l'acide phosphomolybdique et ses sels, l'acide phosphotungstique et ses sels peuvent être avantageusement employés.

La source de vanadium avantageusement utilisée peut être choisie parmi le pentaoxyde de vanadium, l'acétyle acétonate de vanadium, le sulfate de vanadium et l'oxalate de vanadium..

Un molécule organique ayant des propriétés chélatantes vis à vis des métaux peut avantageusement être introduit dans la solution si l'Homme du métier le juge nécessaire. Le produit est alors généralement mûri, séché et optionnellement calciné sous atmosphère oxydante, par exemple sous air, habituellement à une température d'environ 300 à 600 °C et de préférence 350 à 550 °C.

La teneur en métal ou métaux du groupe VIB, est avantageusement comprise entre 2 et 20 % poids de trioxyde du métal ou des métaux du groupe VI B par rapport à la masse totale du catalyseur, de préférence entre 3 et 17% poids, de manière très préférée entre 4 et 17% poids. La somme des teneurs en métaux du groupe VIII, est avantageusement comprise entre 0,1 et 5 % en poids de l'oxyde des métaux du groupe VIII par rapport à la masse totale du catalyseur, de préférence entre 0,3 et 4%, de manière très préférée entre 0,6 et 3,5% poids, de manière encore plus préférée entre 1 et 3,5 % poids.

Les quantités respectives de métal ou métaux du groupe VI B et de métaux du groupe VIII sont avantageusement telles que le rapport atomique métaux du groupe VIII sur métal ou métaux du groupe VI B (VIII/VI B) soit compris entre 0,1:1 à 0,7:1 et de préférence entre 0,2:1 à 0,6:1 et de manière plus préférée 0,35:1 à 0,55:1. Ce rapport peut notamment être ajusté selon le type de charge et le positionnement du catalyseur, soit dans une section HDM, soit dans une section HDS.

La teneur en phosphore est avantageusement comprise entre 0,1 à 9 % en poids de pentaoxyde de phosphore par rapport à la masse totale du catalyseur, de préférence entre 0,25 et 6% poids et de manière encore plus préférée entre 0,5 et 4,5 %poids.

La teneur en vanadium est comprise entre 0,25 à 7 % en poids de pentaoxyde de vanadium par rapport à la masse totale du catalyseur, de préférence entre 0,5 et 5% poids et de manière encore plus préférée entre 0,6 et 4 %poids.

De plus, les quantités respectives vanadium et de métal ou métaux du groupe VIB sont avantageusement telles que le rapport atomique vanadium sur métaux du groupe VI B est avantageusement compris entre 0,1:1 et 0,5:1, de préférence entre 0,2:1 et 0,4:1 et de manière préférée entre 0,2:1 et 0,35:1.

## Sulfuration du catalyseur

Avant leur mise en oeuvre dans le procédé selon l'invention, les catalyseurs de la présente invention sont soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà connue déjà décrite dans la littérature, par exemple : sulfuration *ex situ* ou *in situ,* procédés de sulfurations non conventionnelles. Une méthode de sulfuration classique bien connue de l'Homme du métier consiste à chauffer le mélange de solides sous flux d'un mélange hydrogène et hydrogène sulfuré ou sous flux d'un mélange d'hydrogène et d'hydrocarbures contenant des molécules soufrées à une température comprise entre 150 et 800 °C, de préférence entre 250 et 600 °C, généralement dans une zone réactionnelle à lit traversé.

## Procédé d'hydrotraitement de charges hydrocarbonées lourdes Charges

Les charges traitées dans le procédé selon l'invention sont avantageusement choisies parmi les résidus atmosphériques, les résidus sous vide issus de distillation directe, les pétroles bruts, étêtés ou non, les huiles désasphaltées, les résidus issus des procédés de conversion tels que par exemple ceux provenant du coking, d'une hydroconversion en lit fixe, en lit bouillonnant, ou encore en lit mobile, pris seuls ou en mélange. Ces charges peuvent avantageusement être utilisées telle quelles ou encore diluées par une fraction hydrocarbonée ou un mélange de fractions hydrocarbonées pouvant être choisies parmi les produits issus du procédé FCC, une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry, ou pouvant venir de la distillation, les fractions gazoles notamment celles obtenues par distillation sous vide dénommée selon la terminologie anglo-saxonne VGO (Vaccuum Gas Oil) ou le gazole de recycle de l'unité d'hydrotraitement de la charge lourde. Les charges lourdes peuvent ainsi avantageusement comprendre des coupes issues du procédé de liquéfaction du charbon, des extraits aromatiques, ou toutes autres coupes hydrocarbonées.

Lesdites charges lourdes présentent généralement plus de 1% en poids de molécules ayant un point d'ébullition supérieur à 500 °C, une teneur en métaux Ni+V supérieure à 1 ppm poids, de préférence supérieure à 20 ppm poids, une teneur en asphaltènes, précipité dans l'heptane (norme NFT60-115), supérieure à 0,05 % en poids, de préférence, supérieure à 1 % en poids.

Les charges lourdes peuvent avantageusement aussi être mélangées avec du charbon sous forme de poudre, ce mélange est généralement appelé slurry. Ces charges peuvent avantageusement être des sous produits issus de la conversion du charbon et re-mélangées à du charbon frais. La teneur en charbon dans la charge lourde est généralement et de préférence un ratio ¼ (Oil/Coal) et peut avantageusement varier largement entre 0,1 et 1. Le charbon peut contenir de la lignite, être un charbon sub-bitumineux (selon la terminologie anglo-saxonne), ou encore bitumineux. Tout autre type de charbon convient pour l'utilisation de l'invention, à la fois dans des réacteurs à lit fixe ou dans des réacteurs fonctionnant en lit bouillonnant.

**Modes de réalisation du procédé**

Le procédé selon l'invention met avantageusement en oeuvre un ou plusieurs catalyseurs décrits selon l'invention dans des procédés d'hydrotraitement permettant de convertir des charges hydrocarbonées lourdes contenant des impuretés soufrées et des impuretés métalliques. Un objectif recherché par l'utilisation des catalyseurs de la présente invention concerne une amélioration des performances en particulier en hydroconversion par rapport aux catalyseurs connus de l'art antérieur. Le catalyseur décrit permet une amélioration quel que soit l'étape (HDM ou HDS) et préserve les fonctions HDM, HDS, HDCCR et éventuellement d'hydrodésasphaltage par rapport aux catalyseurs conventionnels, c'est-à-dire ne contenant pas de vanadium autre que celui-apporté par la réaction d'hydrodémétallation. Dans l'enchaînement catalytique, tout ou partie des catalyseurs peuvent satisfaire à la description selon l'invention établie ci-avant. Il est notamment possible de réaliser un enchaînement combinant des catalyseurs conventionnels avec des catalyseurs selon l'invention.

Le procédé selon l'invention peut être mis en oeuvre au moins pour partie en lit fixe avec pour objectif l'élimination des métaux et du soufre et d'abaisser le point d'ébullition moyen des hydrocarbures. Dans le cas où le procédé selon l'invention est mis en oeuvre en lit fixe, la température de mise en oeuvre est avantageusement comprise entre 320 °C et 450 °C, de préférence 350 °C à 410 °C, sous une pression partielle en hydrogène avantageusement comprise entre 3 MPa et 30 MPa, de préférence entre 10 et 20 MPa, à une vitesse spatiale avantageusement comprise entre 0,05 et 5 volume de charge par volume de catalyseur et par heure, et avec un rapport hydrogène gazeux sur charge liquide d'hydrocarbures avantageusement compris entre 200 et 5000 normaux mètres cubes par mètres cubes, de préférence 500 à 1500 normaux mètres cubes par mètres cubes. Le procédé comprend généralement au moins une étape d'hydrodémetallation et au moins une étape d'hydrodésulfuration. L'invention concerne donc les étapes d'hydrodémétallation et d'hydrodésulfuration, cependant, d'autres étapes de transformation peuvent avantageusement être mises en oeuvre, soit en amont de l'étape d'hyrodémétallation, soit en aval de l'étape d'hydrodésulfuration soit entre les étapes d'hydrodémétallation et d'hydrodésulfuration. Le procédé selon l'invention est avantageusement mis en oeuvre dans un à dix réacteurs successifs, le ou les catalyseur(s) selon l'invention pouvant avantageusement être chargés dans un ou plusieurs réacteurs et/ou dans tout ou partie des réacteurs

Le procédé selon l'invention peut être aussi mis en oeuvre pour partie en lit bouillonnant sur les mêmes charges. Dans le cas où le procédé selon l'invention est mis en oeuvre en lit bouillonnant, le catalyseur est avantageusement mis en oeuvre à une température comprise entre 320 et 450 °C, sous une pression partielle d'hydrogène avantageusement comprise entre 3 et 30 MPa, de préférence entre 10 et 20 MPa, à une vitesse spatiale avantageusement comprise entre 0,1 et 10 volumes de charge par volume de catalyseur et par heure, de préférence entre 0,5 et 2 volumes de charge par volume de catalyseur et par heure, et avec un rapport hydrogène gazeux sur charge liquide d'hydrocarbures avantageusement compris entre 100 et 3000 normaux mètres cubes par mètres cubes, de préférence entre 200 à 1200 normaux mètres cubes par mètres cubes.

Selon un mode de réalisation préféré, le procédé selon l'invention est mis en oeuvre en lit fixe.

Les exemples suivant illustrent l'invention sans toutefois en limiter la portée.

**Exemples**

**Exemple 1** : **Préparation d'un support A rentrant dans la composition des catalyseurs d'HDM de l'invention**

Nous avons préparé un support A à base d'alumine de manière à pouvoir préparer des catalyseurs tels que décrits dans les exemples qui suivent à partir d'un même support mis en forme. Pour ce faire, nous avons dans un premier temps préparé de la boehmite (ou gel d'alumine) selon le procédé décrit dans le brevet US 4,154,812. Le réacteur est chauffé à 65 °C. Avant la phase d'ajout simultanée des deux réactifs, environ 8 g équivalent $Al_2O_3$ ont été introduits dans un volume de 1290 mL. Pendant la phase d'ajout simultanée des deux réactifs, le pH est maintenu à une valeur voisine de 9. A la fin de l'ajout, 144 g équivalent $Al_2O_3$ ont été versés pour un volume total de 3530 mL. La boehmite en suspension ainsi obtenue a été filtrée, lavée de manière à éliminer les impuretés et séchée à 120 °C pendant une nuit. Ce gel a été ensuite mélangé à une solution aqueuse contenant de l'acide nitrique à 52,7% (1% poids d'acide par gramme de gel sec), puis malaxé pendant 20 minutes dans un malaxeur à bras en Z. La pâte a ensuite été mélangée avec une solution aqueuse contenant de l'ammoniaque à 20,3% (40 % mol d'ammoniaque par mole d'acide) pendant 5 minutes dans le même malaxeur. A l'issue de ce malaxage, la pâte obtenue est passée à travers une filière ayant des orifices trilobes de diamètre inscrit égal à 2,0 mm sur une extrudeuse piston. Les extrudés sont ensuite séchés une nuit à 120 °C puis calcinés à 750 °C pendant deux heures sous un débit d'air humide contenant 200 g d'eau / kg d'air sec.

On obtient ainsi des extrudés trilobes de 1,6 mm de diamètre, ayant une surface spécifique de 180 m$^2$/g, un volume poreux total de 0,80 ml/g, une distribution de mésopores centrée sur 15 nm (dp à Vméso/2). Cette alumine A contient en outre 0,20 ml/g de volume poreux dans les pores de diamètre supérieur à 50 nm (volume macroporeux), c'est à dire un volume macroporeux égal à 25 % du volume poreux total.

**Exemple 2 : Préparation d'un support B rentrant dans la composition des catalyseurs d'HDS de l'invention**

Nous avons préparé un support B à base d'alumine de manière à pouvoir préparer des catalyseurs tels que décrits dans les exemples qui suivent à partir d'un même support mis en forme. Pour ce faire, nous avons dans un premier temps préparé de la boehmite (ou gel d'alumine) selon le procédé décrit dans le brevet US 4 154 812. Le réacteur est chauffé à 60 °C. Avant la phase d'ajout simultanée des deux réactifs, environ 24 g équivalent Al$_2$O$_3$ ont été introduit dans un volume de 1280 mL. Pendant la phase d'ajout simultanée des deux réactifs, le pH est maintenu à une valeur voisine de 9. A la fin de l'ajout, 124 g équivalent Al$_2$O$_3$ ont été versé pour un volume total de 3420 mL. La boehmite en suspension ainsi obtenue a été filtré, lavé de manière à éliminer les impuretés et séché à 120 °C pendant une nuit. Ce gel a été ensuite mélangé à une solution contenant de l'acide nitrique à 66% (5% en poids d'acide par gramme de gel sec), puis malaxée pendant 15 minutes dans un malaxeur à bras en Z. La pâte a ensuite été mélangée avec une solution aqueuse contenant de l'ammoniaque à 20,3% (40 % mol d'ammoniaque par mole d'acide) pendant 5 minutes dans le même malaxeur. A l'issue de ce malaxage, la pâte obtenue a été passée à travers une filière ayant des orifices trilobes de diamètre inscrit égal à 1,6 mm sur une extrudeuse piston. Les extrudés ont ensuite été séchés durant une nuit à 120 °C, puis calcinés à 540 °C pendant 2 heures sous air sec. On obtient ainsi des extrudés trilobes de 1,2 mm de diamètre ayant une surface spécifique de 281 m$^2$/g, un volume poreux total de 0,71 ml/g et une distribution poreuse monomodale centrée sur 10 nm. Le support B présente ainsi un volume macroporeux égal à 0 % du volume poreux total.

Les caractéristiques texturales des supports A et B sont résumées dans le Tableau 1.

Tableau 1 : Caractéristiques texturales des supports utilisés

|  | A | B |
|---|---|---|
| S$_{BET}$ (m2/g) | 180 | 281 |
| VPT (ml/g) | 0,80 | 0,69 |
| dp$_{Vméso/2}$ (nm) | 15 | 10 |
| V$_{50nm}$(ml/g) | 0,2 | - |
| V$_{50nm}$ (% du VPT) | 25 | 0 |

**Exemple 3 : Préparation d'un catalyseur A1 (comparatif)**

Nous avons imprégné à sec le support A bimodal issu de l'exemple 1 (Caractéristiques dans le tableau 1). La solution aqueuse de l'imprégnation contient des sels du molybdène, du nickel ainsi que de l'acide phosphorique (H$_3$PO$_4$) et de l'eau oxygénée (H$_2$O$_2$). Le sel de molybdène est l'heptamolybdate d'ammonium Mo$_7$O$_{24}$(NH$_4$)$_6$.4H$_2$O et celui du nickel est le nitrate de nickel Ni(NO$_3$)$_2$.6H$_2$O. Les quantités de chacun de ces sels en solution ont été déterminées de manière à déposer la quantité désirée de chaque élément dans la catalyseur.

Après maturation à température ambiante dans une atmosphère saturée en eau, les extrudés du support imprégné sont séchés une nuit à 120 °C, puis calcinés à 500 °C durant 2 heures sous air. La teneur en trioxyde de molybdène est de 6% poids, celle en oxyde de nickel est de 1,5% poids, et celle du pentaoxyde de phosphore est de 1,2% poids. Le rapport atomique P/Mo est égal à 0,4 et le rapport atomique Ni/Mo est égal à 0,49.

**Exemple 4 : Préparation d'un catalyseur A2 (selon l'invention)**

Nous avons imprégné à sec le support A issu de l'exemple 1 (Caractéristiques dans le tableau 1). La solution aqueuse de l'imprégnation contient des sels du molybdène, du nickel, du vanadium ainsi que de l'acide phosphorique (H$_3$PO$_4$) et de l'eau oxygénée (H$_2$O$_2$). Le sel de molybdène est l'heptamolybdate d'ammonium Mo$_7$O$_{24}$(NH$_4$)$_6$.4H$_2$O et

celui du nickel est le nitrate de nickel Ni(NO$_3$)$_2$.6H$_2$O. Le vanadium est lui introduit à partir du sulfate de vanadium. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120 °C puis calcinés à 500 °C durant 2 heures sous air. La teneur en trioxyde de molybdène est de 6% poids, celle en oxyde de nickel est de 1,5% poids, celle en pentaoxyde de vanadium est égale à 0,9% poids, et celle du pentaoxyde de phosphore est de 1,8% poids. Le rapport atomique P/Mo est égal à 0,62 et le rapport atomique Ni/Mo est égal à 0,49. Enfin, le rapport atomique V/Mo est égal à 0,24.

**Exemple 5** : Préparation d'un catalyseur A3 (selon l'invention)

Nous avons imprégné à sec un support A bimodal issu de l'exemple 1 (Caractéristiques dans le tableau 1). La solution aqueuse de l'imprégnation contient des sels du molybdène, du cobalt, du vanadium ainsi que de l'acide phosphorique (H$_3$PO$_4$) et de l'eau oxygénée (H$_2$O$_2$). Le sel de molybdène est l'heptamolybdate d'ammonium Mo$_7$O$_{24}$(NH$_4$)$_6$.4H$_2$O et celui du nickel est le nitrate de cobalt Co(NO$_3$)$_2$.6H$_2$O. Le vanadium est lui introduit à partir du sulfate de vanadium. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120 °C puis calcinés à 500 °C durant 2 heures sous air. La teneur en trioxyde de molybdène est de 6% poids, celle en oxyde de cobalt est de 1,5% poids, celle en pentaoxyde de vanadium est égale à 0,9% poids, et celle du pentaoxyde de phosphore est de 1,8% poids. Le rapport atomique P/Mo est égal à 0,61 et le rapport atomique Co/Mo est égal à 0,49. Enfin, le rapport atomique V/Mo est égal à 0,24.

**Exemple 6** : Préparation d'un catalyseur A4 (comparatif)

Nous avons imprégné à sec un support A bimodal issu de l'exemple 1 (Caractéristiques dans le tableau 1). La solution aqueuse de l'imprégnation contient des sels du molybdène, du nickel, du vanadium ainsi que de l'acide phosphorique (H$_3$PO$_4$) et de l'eau oxygénée (H$_2$O$_2$). Le sel de molybdène est l'heptamolybdate d'ammonium Mo$_7$O$_{24}$(NH$_4$)$_6$.4H$_2$O et celui du nickel est le nitrate de nickel Ni(NO$_3$)$_2$.6H$_2$O. Le vanadium est lui introduit à partir du sulfate de vanadium. Les quantités de chacun de ces sels en solution ont été déterminées de manière à déposer la quantité désirée de chaque élément dans le catalyseur

Après maturation à température ambiante dans une atmosphère saturée en eau, les extrudés du support imprégné sont séchés une nuit à 120 °C puis calcinés à 500 °C durant 2 heures sous air. La teneur en trioxyde de molybdène est de 6% poids, celle en oxyde de nickel est de 1,5% poids, celle en pentaoxyde de vanadium est égale à 0,21 % poids, et celle du pentaoxyde de phosphore est de 1,2% poids. Le rapport atomique P/Mo est égal à 0,4 et le rapport atomique Co/Mo est égal à 0,49. Enfin, le rapport atomique V/Mo est égal à 0,05.

**Exemple 7** : Évaluation des catalyseurs A1, A2, A3 et A4 en hydrotraitement de résidus atmosphérique (RA) Arabian Léger.

Les catalyseurs A1 et A2 ont été soumis à un test catalytique en réacteur batch fermé et parfaitement agité, sur une charge de type RA Arabian Light (Tableau 2).

Tableau 2 : Caractéristiques de la charge RA Arabian Light utilisée

| | | RA Arabian Light |
|---|---|---|
| Densité 15/4 | | 0,9712 |
| Viscosité à 100 °C | mm$^2$/s | 45 |
| Soufre | % pds | 3,38 |
| Azote | ppm | 2257 |
| Nickel | ppm | 10,6 |
| Vanadium | ppm | 41,0 |
| Carbone aromatique | % | 24,8 |
| Carbone conradson | % pds | 10,2 |

(suite)

|  |  | RA Arabian Light |
|---|---|---|
| Asphaltènes C7 | % pds | 3,2 |
| SARA |  |  |
| Saturés | % pds | 28,1 |
| Aromatiques | % pds | 46,9 |
| Résines | % pds | 20,1 |
| Asphaltènes | % pds | 3,5 |
| Distillation simulée |  |  |
| PI | °C | 219 |
| 5% | °C | 299 |
| 10% | °C | 342 |
| 20% | °C | 409 |
| 30% | °C | 463 |
| 40% | °C | 520 |
| 50% | °C | 576 |
| 80% | °C | 614 |
| DS : res disti | %pds | 57 |

Pour ce faire, après une étape de sulfuration ex-situ par circulation d'un mélange gazeux $H_2S/H_2$ durant 2 heures à 350 °C, 15 ml de catalyseur est chargé à l'abri de l'air dans le réacteur batch puis est recouvert de 90 ml de charge. Les conditions opératoires sont listés dans le Tableau 3.

Tableau 3 : Conditions opératoires mises en oeuvre en réacteur batch

| Pression totale | 9.5 MPa |
|---|---|
| Température de test | 370 °C |
| Durée de l'essai | 3 heures |

A la fin de l'essai, le réacteur est refroidi et après un triple strippage de l'atmosphère sous azote (10 minutes à 1 MPa), la recette est recueillie et analysé par fluorescence des rayons X (Soufre et métaux) et par distillation simulée (ASTM D7169).

Le taux d'HDS est défini de la façon suivante :

$$HDS\ (\%\ pds) = ((\%\ pds\ S)_{charge} - (\%\ pds\ S)_{recette}) / (\%\ pds\ S)_{charge} \times 100$$

De la même manière, le taux d'HDM est défini de la façon suivante :

$$HDM\ (\%\ pds) = ((ppm\ pds\ Ni+V)_{charge} - (ppm\ pds\ Ni+V)_{recette}) / (ppm\ pds\ Ni+V)_{charge} \times 100$$

Enfin, l'hydroconversion mesurée est le taux de conversion de la fraction 540 °C+ définie par la relation suivante :

$$HDX_{540+}\ (\%\ pds) = ((X_{540+})_{charge} - (X_{540+})_{effluent}) / (X_{540+})_{charge} \times 100$$

où $X_{540+}$ est la fraction massique de composés de poids moléculaire supérieur à 540 °C.

Les performances des catalyseurs sont résumées dans le Tableau 4.

Tableau 4 : Performances HDS, HDM et HDX des catalyseurs A1, A2, A3 et A4

| Catalyseurs | HDS (% poids) | HDM (% poids) | HDX$_{540+}$ (% poids) |
|---|---|---|---|
| A1 (comparatif) | 52 | 77 | 12 |
| A2 (selon l'invention) | 46 | 76 | 19 |
| A3 (selon l'invention) | 45 | 73 | 20 |
| A4 (comparatif) | 45 | 72 | 13 |

On déduit du Tableau 4 que la mise en oeuvre des catalyseurs de la présente invention engendre un gain importante de conversion du RSV (coupe 540+) avec une faible dégradation des performances HDS et HDM en relatif.

**Exemple 8** : **Préparation d'un catalyseur B1 (comparatif)**

Nous avons imprégné à sec un support B issu de l'exemple 2 et sur lequel il n'y a pas de macroporosité et dont les caractéristiques sont indiquées dans le tableau 1. La solution aqueuse de l'imprégnation contient des sels du molybdène, du nickel ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel (cobalt) $Ni(NO_3)_2.6H_2O$. Les quantités de chacun de ces sels en solution ont été déterminées de manière à déposer la quantité désirée de chaque élément dans le catalyseur.

Après maturation à température ambiante dans une atmosphère saturée en eau, les extrudés du support imprégné sont séchés une nuit à 120 °C puis calcinés à 500 °C durant 2 heures sous air. La teneur en trioxyde de molybdène est de 16% poids, celle en oxyde de nickel est de 3% poids, et celle du pentaoxyde de phosphore est de 2,3% poids. Le rapport atomique P/Mo est égal à 0,29. Enfin, le rapport atomique Ni/Mo est égal à 0,36.

**Exemple 9** : **Préparation d'un catalyseur B2 (selon l'invention)**

Nous avons imprégné à sec un support B issu de l'exemple 2 et sur lequel il n'y a pas de macroporosité et dont les caractéristiques sont indiquées dans le tableau 1. La solution aqueuse de l'imprégnation contient des sels du molybdène, du nickel, du vanadium ainsi que de l'acide phosphorique ($H_3PO_4$) et de l'eau oxygénée ($H_2O_2$). Le sel de molybdène est l'heptamolybdate d'ammonium $Mo_7O_{24}(NH_4)_6.4H_2O$ et celui du nickel est le nitrate de nickel (cobalt) $Ni(NO_3)_2.6H_2O$. Le vanadium est introduit à partir du sulfate de vanadium. Les quantités de chacun de ces sels en solution ont été déterminées de manière à déposer la quantité désirée de chaque élément dans le catalyseur

Après maturation à température ambiante dans une atmosphère saturée en eau, les extrudés du support imprégné sont séchés une nuit à 120 °C, puis calcinés à 500 °C durant 2 heures sous air. La teneur en trioxyde de molybdène est de 16% poids, celle en oxyde de nickel est de 3% poids, celle en pentaoxyde de vanadium est de 3,9% poids et celle du pentaoxyde de phosphore est de 5,0% poids. Le rapport atomique P/Mo est égal à 0,63. Le rapport atomique Ni/Mo est égal à 0,36. Enfin, le rapport V/Mo est égal à 0,39.

**Exemple 10** : **Évaluation en hydrotraitement en lit fixe des catalyseurs B1 et B2**

Les catalyseurs B1 et B2 décrits dans les exemples 8 et 9 ont été comparés en test d'hydrotraitement de résidus pétroliers avec un chargement en aval du catalyseur A1 (30 % du volume catalytique, pour 70 % du volume occupé par les catalyseurs B1 ou B2) qui réalise l'hydrodémétallation, l'ensemble rendant compte de l'ensemble du procédé industriel d'hydrotraitement. La charge est constituée d'un mélange entre un résidu atmosphérique (RA) d'origine Moyen Orient (Arabian médium) et un résidu sous vide (Arabian Light). Ce résidu se caractérise par de fortes teneurs en carbone Conradson (13,2% en poids) et asphaltènes (5,2% en poids) et une quantité élevée de nickel (22 ppm en poids), vanadium (67 ppm en poids) et soufre (3,38 % en poids). Les caractéristiques complètes de la charge sont reportées dans le Tableau 5.

Tableau 5 : Caractéristiques de la charge RA AM/RSV AL utilisée

|  |  | Mix RA AM/RSV AL |
|---|---|---|
| Densité 15/4 |  | 0,9886 |

(suite)

| | | Mix RA AM/RSV AL |
|---|---|---|
| Soufre | % pds | 3,86 |
| Azote | ppm | 2800 |
| Nickel | ppm | 22 |
| Vanadium | ppm | 67 |
| Carbone conradson | % pds | 13,2 |
| Asphaltènes C7 | % pds | 4,6 |
| Distillation simulée | | |
| PI | °C | 261 |
| 5% | °C | 362 |
| 10% | °C | 403 |
| 20% | °C | 454 |
| 30% | °C | 497 |
| 40% | °C | 536 |
| 50% | °C | 571 |
| 60% | °C | 603 |
| 70% | °C | - |
| 80% | °C | - |
| 90% | °C | - |
| DS : PF °C | °C | 614 |
| DS : res disti | %pds | 63 |

Après une étape de sulfuration par circulation dans le réacteur d'une coupe gazole additionnée de DMDS à une température finale de 350 °C, on opère l'unité avec le résidu pétrolier décrit ci-dessous dans les conditions opératoires du Tableau 6.

Tableau 6 : Conditions opératoires mises en oeuvre en réacteur en lit fixe

| Pression totale | 15 MPa |
|---|---|
| Température de test | 370 °C |
| Vitesse spatiale horaire du résidu | 0,2 h$^{-1}$ |
| Débit d'hydrogène | 1000 std l. $_{H2}$/l. $_{charge}$ |

Après une période de stabilisation de 300 heures, les performances en hydrodésulfuration (HDS) et en hydrodémétallation (HDM) sont relevées, ainsi qu'en hydroconversion du RSV (coupe 540 °C+). Elles sont reportées dans le Tableau 7.

Tableau 7 : Performances HDS, HDM et HDX des enchainements de catalyseurs $A_x$ + $B_y$

| Catalyseurs | HDS (%) | HDM (%) | HDX$_{540+}$ (%) |
|---|---|---|---|
| A1 + B1 (comparatif) | 92 | 85 | 12 |
| A1 + B2 (selon l'invention) | 92 | 84 | 17 |
| A2 + B1 (selon l'invention) | 92 | 85 | 19 |
| A2 + B2 (selon l'invention) | 91 | 84 | 22 |

On révèle que le système catalytique selon l'invention est nettement plus performant en hydroconversion du RSV (+ 5%) que le système conventionnel sans perte significative d'HDS ou d'HDM.

**Exemple 11** : **Évaluation en hydrotraitement en lit fixe des systèmes catalytiques "A2 + B1" et "A2 + B2" en comparaison au système catalytique "A1 + B1"**

Afin de valider l'intérêt du système catalytique constitué d'un catalyseur selon l'invention pour l'hydrodémétallation HDM et d'un catalyseur selon l'invention pour l'hydrodésulfuration HDS, les systèmes catalytiques "A2 + B1" et "A2 + B2" ont été évalués selon la méthodologie de test décrite en exemple 10 (mêmes conditions opératoires et mêmes proportions de catalyseurs). Les résultats des évaluations sont présentés dans le Tableau 7. On montre que l'utilisation du procédé selon l'invention selon lequel le catalyseur imprégné de vanadium est positionné dans la section HDM (A2) apporte un gain de conversion sur le système catalytique complet, avec un catalyseur conventionnel dans la section HDS (+7%), et ce gain peut même être accru avec l'utilisation du système complet selon l'invention, c'est-à-dire avec des catalyseurs imprégnés de vanadium dans les deux étapes (HDM et HDS) : A2 + B2. Ces gains sont obtenus par ailleurs sans perte significative sur le système catalytique complet.

## Revendications

1.  Catalyseur pour l'hydrotraitement de charges hydrocarbonées lourdes comprenant :

    - au moins un élément du groupe VIB ;
    - au moins un élément du groupe VIII ;
    - du phosphore, à une teneur comprise entre 0,1 et 9% poids de pentoxyde de phosphore par rapport à la masse totale de catalyseur ;
    - du vanadium, à une teneur comprise entre 0,25 à 7 % poids de pentoxyde de vanadium par rapport à la masse totale de catalyseur ;
    - au moins un support oxyde réfractaire poreux ;

    ledit catalyseur ayant les caractéristiques suivantes :

    o un volume poreux total supérieur ou égal à 0,3 ml/g ;
    o un volume macroporeux, défini comme le volume des pores de diamètre supérieur à 50 nm, inférieur ou égal à 40% du volume poreux total ;
    o un diamètre médian des mésopores, définis comme les pores de diamètre compris entre 3.6 et 50 nm, compris entre 5 nm et 36 nm ;
    o une surface BET au moins égale à 120 m$^2$/g.

2.  Catalyseur selon la revendication 1 dans lequel la teneur en vanadium est comprise entre 0,5 et 5% poids de pentaoxyde de vanadium par rapport à la masse totale de catalyseur.

3.  Catalyseur selon la revendication 2 dans lequel la teneur en vanadium est comprise entre 0,6 et 4 % poids de pentaoxyde de vanadium par rapport à la masse totale de catalyseur.

4.  Catalyseur selon l'une des revendications précédentes dans lequel la teneur en métal du groupe VIB est comprise entre 2 et 20 % poids et la teneur en métal du groupe VIII est avantageusement comprise entre 0,1 et 5 % poids, les teneurs étant exprimées en % d'oxyde métallique par rapport à la masse totale de catalyseur.

5.  Catalyseur selon l'une des revendications précédentes dans lequel le support oxyde comprend une proportion majeure d'alumine.

6.  Catalyseur selon l'une des revendications précédentes dans lequel l'élément du groupe VIB est le molybdène.

7.  Catalyseur selon l'une des revendications précédentes dans lequel l'élément du groupe VIII est le nickel ou le cobalt.

8.  Catalyseur selon l'une des revendications précédentes dans lequel le rapport atomique vanadium sur métaux du groupe VIB est compris entre 0,1:1 et 0,5:1.

**9.** Catalyseur selon l'une des revendications précédentes sous forme partiellement ou totalement sulfurée.

**10.** Catalyseur selon l'une des revendications précédentes dans lequel le diamètre médian des mésopores est compris entre 5 et 20 nm, le volume poreux total est supérieur ou égal à 0,3 ml/g, et le volume macroporeux est inférieur à 10% du volume poreux total.

**11.** Catalyseur selon l'une des revendications 1 à 9 dans lequel le diamètre médian des mésopores est compris entre 10 et 36 nm, le volume poreux total est supérieur ou égal à 0,5 ml/g, et le volume macroporeux est supérieur à 5% du volume poreux total.

**12.** Procédé d'hydrotraitement utilisant au moins un catalyseur selon l'une des revendications 1 à 11 pour l'hydrotraitement de charges hydrocarbonées lourdes choisies parmi les résidus atmosphériques, les résidus sous vide issus de la distillation directe, les huiles désasphaltées, les résidus issus des procédés de conversions tels que par exemple ceux provenant du coking, d'une hydroconversion en lit fixe, en lit bouillonnant ou encore en lit mobile, pris seuls ou en mélange.

**13.** Procédé d'hydrotraitement selon la revendication 12 réalisé en partie en lit bouillonnant à une température comprise entre 320 et 450 °C, sous une pression partielle d'hydrogène comprise entre 3 MPa et 30 MPa, à une vitesse spatiale avantageusement comprise entre 0,1 et 10 volumes de charge par volume de catalyseur et par heure, et avec un rapport hydrogène gazeux sur charge liquide d'hydrocarbures avantageusement compris entre 100 et 3000 normaux mètres cubes par mètres cubes.

**14.** Procédé d'hydrotraitement selon la revendication 12 ou 13 réalisé au moins en partie en lit fixe à une température comprise entre 320 °C et 450 °C, sous une pression partielle en hydrogène comprise entre 3 MPa et 30 MPa, à une vitesse spatiale comprise entre 0,05 et 5 volume de charge par volume de catalyseur et par heure, et avec un rapport hydrogène gazeux sur charge liquide d'hydrocarbures compris entre 200 et 5000 normaux mètres cubes par mètres cubes.

**15.** Procédé d'hydrotraitement de résidus en lit fixe comprenant au moins :

    a) une étape d'hydrodémétallation
    b) une étape d'hydrodésulfuration

dans lequel au moins un catalyseur selon l'une des revendications 1 à 11 est utilisé dans au moins une desdites étapes a) et b).

Europäisches
Patentamt
European
Patent Office
Office européen
des brevets

# RAPPORT DE RECHERCHE EUROPEENNE

Numéro de la demande

EP 13 30 6574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 255 873 A2 (IFP ENERGIES NOUVELLES [FR]) 1 décembre 2010 (2010-12-01) | 1-15 | INV.<br>B01J21/04 |
| Y | * le document en entier *<br>* alinéas [0022], [0025] - [0046], [0050] - [0066], [0109] - [0113] *<br>* exemples *<br>* Plus particulièrement catalyseurs C à E * | 13-15 | B01J23/22<br>B01J23/88<br>B01J23/882<br>B01J23/883<br>B01J23/887<br>B01J27/185<br>B01J27/188 |
| X | JP 2001 162168 A (PETROLEUM ENERGY CENTER FOUND; IDEMITSU KOSAN CO) 19 juin 2001 (2001-06-19) | 1-14 | B01J27/19<br>B01J35/10<br>C10G45/08 |
| Y | * le document en entier *<br>* alinéas [0005], [0012], [0013], [0019] *<br>* exemples *<br>* revendications * | 15 | |
| X | US 6 589 908 B1 (GINESTRA JOSIANE M [US] ET AL) 8 juillet 2003 (2003-07-08) | 1-12 | |
| Y | * le document en entier *<br>* colonne 5, ligne 53 - colonne 6, ligne 53 *<br>* page 7, ligne 8-40 *<br>* exemples 1,3 *<br>* tableau 1 *<br>* revendications 1,9 * | 13-15 | DOMAINES TECHNIQUES RECHERCHES (IPC)<br><br>B01J<br>C10G |
| X | FR 2 917 647 A1 (INST FRANCAIS DU PETROLE [FR]) 26 décembre 2008 (2008-12-26) | 1-12,14 | |
| Y | * le document en entier *<br>* page 5, ligne 18-23 *<br>* page 8, ligne 12-29 *<br>* page 10, ligne 19-22 *<br>* exemples 1,3,12-14 *<br>* revendications * | 13,15 | |

-/--

Le présent rapport a été établi pour toutes les revendications

| Lieu de la recherche | Date d'achèvement de la recherche | Examinateur |
|---|---|---|
| Munich | 18 février 2014 | Gosselin, Daniel |

EP 2 745 931 A1

Europäisches
Patentamt

European
Patent Office

Office européen
des brevets

**RAPPORT DE RECHERCHE EUROPEENNE**

Numéro de la demande

EP 13 30 6574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 02/09870 A2 (AKZO NOBEL NV [NL]; NIPPON KETJEN CO LTD [JP]; IKEDA HIROYUKI [JP]; MO) 7 février 2002 (2002-02-07) | 1-12,14 | |
| Y | * le document en entier * <br> * page 2, ligne 21-24 * <br> * page 5, ligne 4 - page 7, ligne 5 * <br> * page 10, ligne 9-27 * <br> * exemples * <br> * revendications * <br> ----- | 13,15 | |
| X | JP 2006 061845 A (IDEMITSU KOSAN CO; PETROLEUM ENERGY CENTER FOUND) 9 mars 2006 (2006-03-09) <br> * le document en entier * <br> * alinéas [0030] - [0034] * <br> * exemples * <br> * tableau 3 * <br> * Catalyseurs régénérés A à C (tableau 3) * <br> ----- | 1-15 | |
| A | US 2002/155045 A1 (KUMAGAI HIDEAKI [JP] ET AL) 24 octobre 2002 (2002-10-24) <br> * le document en entier * <br> * alinéas [0001], [0002], [0082], [0083] * <br> * figures 2,3 * <br> ----- | 1-15 | DOMAINES TECHNIQUES RECHERCHES (IPC) |
| A | FR 2 895 280 A1 (INST FRANCAIS DU PETROLE [FR]) 29 juin 2007 (2007-06-29) <br> * le document en entier * <br> * page 12, ligne 32 - page 13, ligne 18 * <br> ----- | 1-15 | |
| A | US 2010/304963 A1 (SINGH MOHAN [KW] ET AL) 2 décembre 2010 (2010-12-02) <br> * le document en entier * <br> * revendications; exemples * <br> ----- | 1-15 | |

Le présent rapport a été établi pour toutes les revendications

| Lieu de la recherche | Date d'achèvement de la recherche | Examinateur |
|---|---|---|
| Munich | 18 février 2014 | Gosselin, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

18

## EP 2 745 931 A1

**ANNEXE AU RAPPORT DE RECHERCHE EUROPEENNE**
**RELATIF A LA DEMANDE DE BREVET EUROPEEN NO.**

EP 13 30 6574

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2014

| Document brevet cité au rapport de recherche | | Date de publication | Membre(s) de la famille de brevet(s) | | Date de publication |
|---|---|---|---|---|---|
| EP 2255873 | A2 | 01-12-2010 | CA | 2688820 A1 | 18-06-2010 |
| | | | CN | 101822994 A | 08-09-2010 |
| | | | EP | 2255873 A2 | 01-12-2010 |
| | | | FR | 2940143 A1 | 25-06-2010 |
| | | | JP | 2010149114 A | 08-07-2010 |
| | | | KR | 20100071016 A | 28-06-2010 |
| | | | RU | 2009146970 A | 27-06-2011 |
| | | | TW | 201034751 A | 01-10-2010 |
| | | | US | 2010155301 A1 | 24-06-2010 |
| JP 2001162168 | A | 19-06-2001 | JP | 4865940 B2 | 01-02-2012 |
| | | | JP | 2001162168 A | 19-06-2001 |
| US 6589908 | B1 | 08-07-2003 | AR | 031507 A1 | 24-09-2003 |
| | | | AT | 302063 T | 15-09-2005 |
| | | | AU | 2866102 A | 11-06-2002 |
| | | | AU | 2002228661 B2 | 17-03-2005 |
| | | | BR | 0115598 A | 02-09-2003 |
| | | | CA | 2429944 A1 | 06-06-2002 |
| | | | CN | 1592653 A | 09-03-2005 |
| | | | DE | 60112799 D1 | 22-09-2005 |
| | | | DE | 60112799 T2 | 19-01-2006 |
| | | | DK | 1349654 T3 | 19-09-2005 |
| | | | EP | 1349654 A2 | 08-10-2003 |
| | | | ES | 2247189 T3 | 01-03-2006 |
| | | | GC | 0000313 A | 01-11-2006 |
| | | | JP | 4405148 B2 | 27-01-2010 |
| | | | JP | 2004523340 A | 05-08-2004 |
| | | | KR | 20030065525 A | 06-08-2003 |
| | | | MX | PA03004678 A | 05-09-2003 |
| | | | NO | 20032396 A | 14-07-2003 |
| | | | RU | 2281161 C2 | 10-08-2006 |
| | | | US | 6589908 B1 | 08-07-2003 |
| | | | US | 2003125198 A1 | 03-07-2003 |
| | | | WO | 0243862 A2 | 06-06-2002 |
| | | | ZA | 200304139 A | 21-04-2004 |
| FR 2917647 | A1 | 26-12-2008 | CN | 101687183 A | 31-03-2010 |
| | | | EP | 2162211 A2 | 17-03-2010 |
| | | | FR | 2917647 A1 | 26-12-2008 |
| | | | JP | 5362712 B2 | 11-12-2013 |
| | | | JP | 2010531224 A | 24-09-2010 |
| | | | KR | 20100041782 A | 22-04-2010 |
| | | | RU | 2010102058 A | 27-07-2011 |
| | | | US | 2010243530 A1 | 30-09-2010 |
| | | | WO | 2009007522 A2 | 15-01-2009 |

EPO FORM P0460

Pour tout renseignement concernant cette annexe : voir Journal Officiel de l'Office européen des brevets, No.12/82

**EP 2 745 931 A1**

**ANNEXE AU RAPPORT DE RECHERCHE EUROPEENNE
RELATIF A LA DEMANDE DE BREVET EUROPEEN NO.**

EP 13 30 6574

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2014

| Document brevet cité au rapport de recherche | | Date de publication | Membre(s) de la famille de brevet(s) | | Date de publication |
|---|---|---|---|---|---|
| WO 0209870 | A2 | 07-02-2002 | AU | 8396701 A | 13-02-2002 |
| | | | CN | 1444506 A | 24-09-2003 |
| | | | EP | 1305112 A2 | 02-05-2003 |
| | | | JP | 4643805 B2 | 02-03-2011 |
| | | | JP | 2002035590 A | 05-02-2002 |
| | | | WO | 0209870 A2 | 07-02-2002 |
| JP 2006061845 | A | 09-03-2006 | AUCUN | | |
| US 2002155045 | A1 | 24-10-2002 | AT | 425809 T | 15-04-2009 |
| | | | AT | 459417 T | 15-03-2010 |
| | | | CA | 2391793 A1 | 13-12-2001 |
| | | | DK | 1291082 T3 | 25-05-2009 |
| | | | EP | 1291082 A1 | 12-03-2003 |
| | | | EP | 1894625 A2 | 05-03-2008 |
| | | | JP | 2003171671 A | 20-06-2003 |
| | | | US | 2002155045 A1 | 24-10-2002 |
| | | | WO | 0194012 A1 | 13-12-2001 |
| FR 2895280 | A1 | 29-06-2007 | AUCUN | | |
| US 2010304963 | A1 | 02-12-2010 | US | 2010304963 A1 | 02-12-2010 |
| | | | WO | 2009022890 A1 | 19-02-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5472928 A
- US 6554994 B
- FR 2681891
- US 5221656 A
- US 5089463 A
- US 7119045 B
- US 6589908 B
- US 4818743 A
- US 6332976 B
- US 20060060509 A
- JP 7196308 B
- JP 9255321 B
- CN 1020109138
- EP 1305112 B1
- US 4729980 A
- US 2817626 A
- CN 1887420
- JP 2006061845 A
- US 3824180 A
- US 3884798 A
- US 5792721 A
- EP 0482841 A
- FR 2780302
- US 3269958 A
- US 4499203 A
- US 3849292 A
- US 3920538 A
- US 4440631 A
- US 4154812 A

**Littérature non-brevet citée dans la description**

- **ZONG et al.** *Recent Patents on Chemical Engineering,* 2009, vol. 2, 22-36
- **A. MARAFI et al.** *Energy & Fuels,* 2008, vol. 22, 2925
- **M. ABSI-HALABI et al.** *Applied Catalysis,* 1991, vol. 72, 193
- **B.M. VOGELAAR.** *Chemical Engineering Science,* 2006, vol. 61, 7463
- **M.S. RANA et al.** *Fuel,* 2007, vol. 86, 1216
- **MAITY et al.** *Appl. Catal., A,* 2003, vol. 250, 231
- **RANA et al.** *Pet. Sci. Technol.,* 2007, vol. 25, 187
- **MAITY et al.** *Energy & Fuels,* 2005, vol. 19, 343
- **SOOGUND et al.** *Appl. Catal. B,* 2010, vol. 98, 39
- **BRUNAUER ; EMMET ; TELLER.** *The journal of the American Chemical Society,* 1938, vol. 60, 309